# EUROPÄISCHE PATENTANMELDUNG

(11) **EP 0 793 916 A1**
(43) Veröffentlichungstag der Anmeldung: **10.09.1997**
(21) Anmeldenummer: 96103327.1
(22) Anmeldetag: 04.03.1996
(51) Int. Cl.: A22C 25/17

(54) **Maschine zum Entfernen einer Oberflächenschicht von insbesondere Fischfilets**

(71) Anmelder: NORDISCHER MASCHINENBAU RUD. BAADER GMBH + CO KG, 23560 Lübeck (DE)
(72) Erfinder: Braeger, Horst, 23560 Lübeck (DE); Jürs, Michael, 23617 Stockelsdorf (DE)

(57) **Zusammenfassung**

Es ist eine Maschine zum Entfernen einer Oberflächenschicht von Fischfilets beschrieben. die Maschine hat eine als Förderfläche wirksame Mitnehmerwalze, deren Mantelfläche ein Andrückschuh mit einer Andrückfläche unter Belassen eines Spaltes gegenübersteht. Der Andrückschuh ist mit einer Führung für ein endloses Bandmesser versehen, wobei im Bereich von dessen Schneide und unmittelbar über dieser Andrückmittel aus einer Anzahl angetriebener Druckrollen gegen Federkraft verdrängbar angeordnet sind.

## Beschreibung

Die Erfindung geht aus von einer Maschine zum Entfernen einer Oberflächenschicht von insbesondere Fischfilets, umfassend eine Förderfläche für das Schneidgut, ein mit seiner Schneide zu dieser beabstandet geführtes angetriebenes Messer sowie im Bereich der Schneide wirksame Andrückmittel zum Andrücken des Schneidgutes an die Förderfläche.

Derartige Einrichtungen sind in vielfältigen Ausführungen bekannt und im Einsatz, wobei ihre Aufgabe darin besteht, beispielsweise von den eingangs erwähnten Fischfilets eine definierte Schicht abzutrennen, um bei diesen beispielsweise die Haut zu entfernen oder eine Fleischschicht abzuschneiden, und so das Fischfilet von unerwünschten Bestandteilen wie Fett- und/oder verfärbten Schichten zu befreien. Dabei kommt es darauf an, daß Hautinseln bzw. allgemeine Störstellen sicher vermieden werden und andererseits ein sparsamer Schnitt erfolgt, der je nach Aufgabe den sogenannten Silberspiegel auf dem Filet beläßt oder nur eben die unerwünschte Schicht von dem Filet abtrennt.

Allgemein geht der Wunsch der Verarbeiter dabei dahin, eine Maschine einzusetzen zu können, die in der Lage ist, mit gleicher Präzision Filets von möglichst allen in Frage kommenden Fischen zu verarbeiten, d. h. beispielsweise sowohl von Flachfischen als auch Rundfischen. Dies ist grundsätzlich problematisch und die damit verbundene Aufgabe bislang nicht zufriedenstellend gelöst. Der Grund dafür liegt insbesondere darin, daß einerseits beispielsweise bei Flachfischen die mit dem Filetfleisch sehr fest verbundene Haut nur mit hochscharfem Messer abzutrennen ist und andererseits bei Rundfischen ein eher stumpfes Messer die besten Ergebnisse bringt. Um für den erstgenannten Fall den notwendigen Schärfezustand ausreichend lange zu erhalten, kommen dafür vorzugsweise Maschinen zur Anwendung, die mit einer bewegten Schneide arbeiten. Nur solche Maschinen sind auch in der Lage, eine anatomisch nicht vorgegebene Oberflächenschicht abzuschneiden, wobei die Bandmesser-Maschine die geeignetste ist. Die Güte des Schnittergebnisses solcher Maschinen ist jedoch in hohem Maße davon abhängig, daß das Schneidgut unter präziser Auflage durch den Schneidprozeß geführt wird.

Aus der US 2 645 812 ist eine Filetspalt- und Enthäutemaschine bekannt, bei der ein Förderband über eine Umlenkwalze kleinen Durchmessers geführt ist, im Bereich der Umlenkwalze ein Bandmesser und über diesem ein Andrückband angeordnet sind, das vor dem Bandmesser durch dicht nebeneinander gelegene, unabhängig voneinander gegen die Schwerkraft ausweichbar geführte Metallscheiben angedrückt gehalten wird.

Wegen des großen Durchmessers der Metallscheiben ist eine glatte Auflage der Filets vor der Schneide des Bandmessers nicht zu erreichen. desweiteren ist das Förderband als Auflage im Schneidbereich nicht geeignet, die gewünschte Schnittpräzision zu erzielen, so daß zur Vermeidung von Hautinseln bzw. Störstellen der Abstand des Bandmessers über dem Förderband so gewählt werden muß, daß von dem Filet eine dickere Schicht abgeschnitten wird, als notwendig ist.

Aus der US 2 173 336 ist weiter eine Scheibenschneidmaschine bekannt, die zum Enthäuten von Fischfilets verwendet wird. Das Filet wird auf einem Zuführband aufliegend einem Bandmesser zugeführt, das der Auflagefläche gegenüberliegt. Dicht vor dessen Schneide ist eine Andrückwalze angeordnet, die aus weichem Gummi besteht und von einem endlosen Preßband umschlungen ist. Auch mit dieser Maschine ist das gewünschte Schnittergebnis nicht erreichbar, da weder die Anordnung des Bandmessers über dem als Drahtgitterband ausgeführten Zuführband, noch die undefinierte Anlage durch das Preßband und die Andrückwalze eine Zuführung der Filets zu dem Bandmesser unter planer Auflage ermöglichen.

Schließlich ist aus der US 2 738 545 eine Enthäutemaschine für Fischfilets bekannt, bei der ein Gitterband als Auflagefläche für die Fischfilets Verwendung findet, dem ein Bandmesser gegenüberliegt. Dicht vor dessen Schneide und oberhalb desselben ist eine Andrückvorrichtung wirksam, die in ihrem Wirkbereich eine Reihe von nebeneinanderliegenden federbelasteten Rillenscheiben aufweist, über die jeweils Niederhaltegurte in Form von Keilriemen geführt sind, die den Andruck auf das Fischfilet übertragen. Auch diese Einrichtung ist aus den oben angeführten Gründen nicht geeignet, die gewünschte Schnittpräzision zu erreichen, was auch letztlich für die Enthäutemaschine nach der DE-AS 2 254 284 zutrifft, die als Andruckmittel eine Vielzahl federbelasteter Lamellen benutzt, die kurz vor einem Bandmesser über eine flexible Schürze auf das Filet einwirkt.

Es ist die Aufgabe der Erfindung, die bekannten Filetspalt- und Enthäutemaschinen so zu verbessern, daß sie universell einsetzbar sind, d. h. sowohl zum Enthäuten unter Erhalt des Silberspiegels auf dem Filetfleisch, als auch zum Abtrennen einer beliebigen Oberflächenschicht. Diese Aufgabe wird bei einer Maschine der eingangs genannten Art erfindungsgemäß dadurch gelöst, daß die Förderfläche als Mantelfläche einer Mitnehmerwalze ausgebildet ist, das Messer als endloses, im Bereich der Mitnehmerwalze in einer Messerführung geführtes Bandmesser ausgeführt ist, die Bestandteil eines Andrückschuhs mit einer der Mitnehmerwalze zuweisenden und mit deren Mantelfläche einen Spalt bildenden Andrückfläche ist, das Bandmesser eine Schnittebene aufweist, die zur Horizontalen einen sich in Durchlaufrichtung öffnenden Winkel von mindestens 45° bildet und die Andrückmittel eine Anzahl von der Mitnehmerwalze weg federnd verdrängbarer Andrückrollen umfassen.

Mit einer derartig ausgestatteten Maschine läßt sich bei Filets aller gängigen Fischarten die Haut in hohem Maße fleischsparend und schonend abtragen oder eine definierte Schicht präzise entfernen. Dieses Ergebnis wird dadurch erreicht, daß dem Bandmesser eine Förderfläche gegenübersteht, die einen konstanten Spalt zur Schneide des Bandmessers in engen Toleranzen gewährleistet, daß die Andrückfläche des Andrückschuhs eine sichere und zügige Förderung sicherstellt und daß die Lage der Schnittebene des Bandmessers bewirkt, daß das Filet im Zusammenwirken mit den Andrückmitteln dem Bandmesser sicher flachliegend präsentiert wird, wobei dies durch die Schwenkbarkeit der Andrückrollen nach Anspruch 5 in entscheidendem Maße unterstützt wird, wie auch dadurch, daß die Umlaufgeschwindigkeit der Mitnehmerwalze höher ist als die der Zuführeinrichtung..

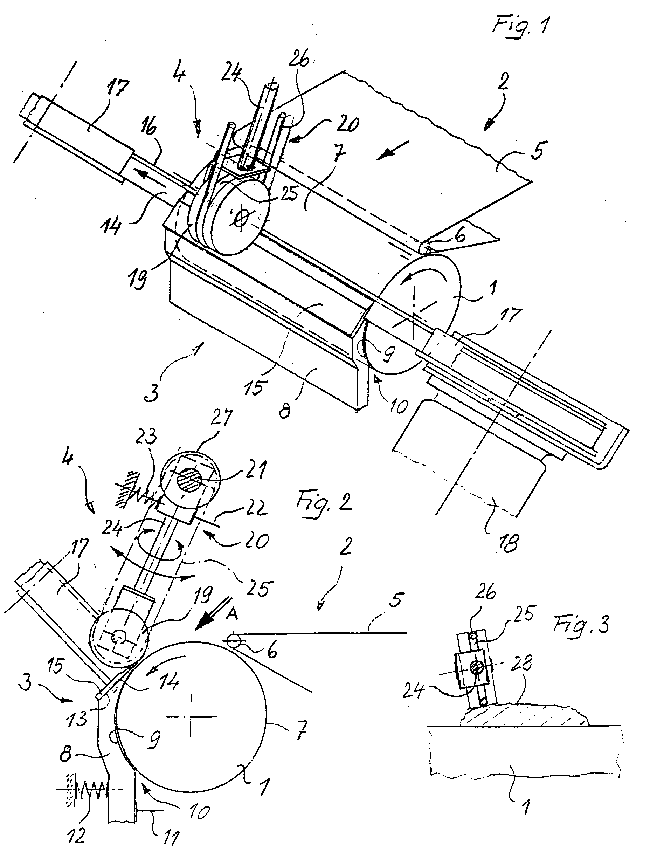

Die Erfindung wird anhand eines in der Zeichnung dargestellten Ausführungsbeispiels näher erläutert. Es zeigen
- Fig. 1: eine perspektivische Teilansicht der erfindungsgemäßen Maschine in vereinfachter Darstellung,
- Fig. 2: eine ausschnittweise Seitenansicht,
- Fig. 3: eine Teilansicht in Richtung des Pfeiles A (Fig. 2).

In einem nicht dargestellten Gestell einer Filetspalt- und Enthäutemaschine für Fischfilets sind eine angetriebene Mitnehmerwalze 1 , eine dieser vorgelagerte Zuführeinrichtung 2 , eine Schneideinrichtung 3 und Andrückmittel 4 angeordnet.

Die Zuführeinrichtung 2 weist ein endloses Zuführband 5 auf, das um Umlenkwalzen geführt ist, von denen lediglich die ablaufseitig e Umlenkwalze 6 gezeigt ist, und das mit einer gegenüber der Umlaufgeschwindigkeit der Mitnehmerwalze 1 geringeren Umlaufgeschwindigkeit angetrieben ist.

Die Mitnehmerwalze 1 ist an ihrer Mantelfläche 7 in bekannter Weise durch Längsnuten griffig ausgeführt. Der Mantelfläche 7 ist im ablaufenden Bereich die Schneideinrichtung 3 zugeordnet, die einen Andrückschuh 8 mit einer Andrückfläche 9 umfaßt, die der Mantelfläche 7 unter Belassen eines Spaltes 10 gegenübersteht. Der Spalt 10 ist dabei vorzugsweise so angelegt, daß das Spaltmaß im Einlaufbereich der Andrückfläche 9 kleiner ist als in dessen Auslaufbereich. Wie in Fig. 2 angedeutet, ist der Andrückschuh 8 durch einen einstellbaren Anschlag 11 abgefangen und gegen die Kraft einer Feder 12 von der Mantelfläche 7 weg verdrängbar gelagert. Die Andrückfläche 9 ist nach oben durch eine Rückenfläche 13 begrenzt, die mit dem oberen Endbereich der Andrückfläche 9 einen spitzen Winkel bildet. Die Rückenfläche 13 ist Teil einer Führung, die in Verbindung mit einer Messerführung 15 eine Führung für das Bandmesser 14 bildet. Das Bandmesser 14 ist dabei so geführt, daß seine Schneide 16 gegen die Laufrichtung der Mitnehmerwalze 1 aus der Führung herausragt. Das Bandmesser 14 ist weiter über zwei außerhalb des Arbeitsbereiches in dem nicht gezeigten Gestell angeordnete Umlenkscheiben 17 geführt, deren eine auf der Welle eines Motors 18 gelagert ist.

Unmittelbar im Bereich über der Schneide 16 des Bandmessers 14 sind die Andrückmittel 4 angeordnet. Sie bestehen aus einer Anzahl Andrückrollen 19 , von denen der Übersicht halber nur eine dargestellt ist. Jede Andrückrolle 19 ist an dem distalen Endteil eines Schwenkarms 20 gelagert, der proximalseitig um eine zu der Achse der Mitnehmerwalze 1 parallele, gestellfeste Achse 21 schwenkbar gelagert ist. Dabei ist jeder Schwenkarm 20 durch einen einstellbaren Anschlag 22 abgestützt und gegen die Kraft einer Feder 23 von der Mitnehmerwalze 1 wegschwenkbar. Der proximale und distale Endteil jedes Schwenkarms 20 sind durch eine sich in dessen Längsrichtung erstreckende Achse 24 drehbar miteinander verbunden, so daß das distale Endteil gegenüber dem proximalen Endteil frei schwenkbar ist (Fig. 3). Jede Andrückrolle 19 ist mit einer Rille 25 versehen, in der ein Antriebsriemen 26 zum Antrieb der Andrückrolle 19 geführt ist und an ihrem Umfang griffig ausgeführt. Der Antrieb erfolgt jeweils über eine Rillenscheibe 27 , die auf der als Antriebswelle ausgebildeten und wie beschrieben gleichzeitig als Schwenkachse für die Schwenkarme 20 dienenden Achse 21 befestigt ist, die der Andrückrolle 19 eine Umlaufgeschwindigkeit erteilt, die leicht höher ist als die Umlaufgeschwindigkeit der Mitnehmerwalze 1 .

Die Wirkungsweise der beschriebenen Maschine ist folgende: Ein zu bearbeitendes Fischfilet 28 wird mit der Außenfläche aufliegend und üblicherweise mit dem Schwanzende vorausweisend auf das Zuführband 5 aufgelegt und durch dieses vorbewegt. Das Fischfilet 28 gelangt so auf die mit höherer Geschwindigkeit umlaufende Mantelfläche 7 der Mitnehmerwalze 1 auf und erfährt dadurch eine Streckung. Die Mitnehmerwalze 1 führt nun das Fischfilet 28 der Schneideinrichtung 3 zu , die eine gewisse Strecke von der Übergabestelle entfernt angeordnet ist und dadurch bewirkt, daß das Fischfilet 28 ruhig auf der Mantelfläche 7 aufliegend die Schneideinrichtung 3 erreicht. Kurz zuvor ist das Filetende unter die Andrückrollen 19 der Andrückmittel 4 gelangt, so daß diese auf die Filet-Innenseite auflaufen. Dank der höheren Umlaufgeschwindigkeit der Andrückrollen 19 und dem durch die Feder 23 bewirkten Andruck wird das Fischfilet 28 aktiv gegen die Mantelfläche 7 der Mitnehmerwalze 1 und die Auflageschicht unter die Schneide 16 des Bandmessers 14 und schließlich in den Spalt 10 zwischen der Mantelfläche 7 und der Andrückfläche 9 des Andrückschuhs 8 gedrängt. In diesem Augenblick wird die abgetrennte Schicht im Fortschritt ihrer Ablösung laufend in dem Spalt 10 eingezwängt und dadurch sicher gefördert, während gleichzeitig der Nutzteil des Fischfilets 28 durch die Andrückrollen 19 über die Messerführung 15 hinweggeschoben werden. Die federnde Ausweichbarkeit des Andrückschuhs 8 bewirkt dabei, daß sich die Schnittstärke des Bandmessers 14 automatisch an die Hautdicke anpaßt, so daß das Abtrennen der Haut auf sparsamste Art und Weise vor sich geht. Die Andrückrollen 19 verdrehen sich bei diesem Prozeß dank ihrer Schwenkbarkeit um die Achse 24 selbsttätig so, daß sie jeweils mit größtmöglicher Fläche aufliegenden, was eine optimale Förderunterstützung und Auflage der Fischfilets 28 bewirkt.

### Bezugszeichenliste

- 1: Mitnehmerwalze
- 2: Zuführeinrichtung
- 3: Schneideinrichtung
- 4: Andrückmittel
- 5: Zuführband
- 6: Umlenkwalze
- 7: Mantelfläche
- 8: Andrückschuh
- 9: Andrückfläche
- 10: Spalt
- 11: Anschlag
- 12: Feder
- 13: Rückenfläche
- 14: Bandmesser
- 15: Messerführung
- 16: Schneide
- 17: Umlenkscheibe
- 18: Motor
- 19: Andrückrolle
- 20: Schwenkarm
- 21: Achse
- 22: Anschlag
- 23: Feder
- 24: Achse
- 25: Rille
- 26: Antriebsriemen
- 27: Rillenscheibe
- 28: Fischfilet

## Patentansprüche

1. Maschine zum Entfernen einer Oberflächenschicht von insbesondere Fischfilets, umfassend eine Förderfläche für das Schneidgut, ein mit seiner Schneide zu dieser beabstandet geführtes angetriebenes Messer sowie im Bereich der Schneide wirksame Andrückmittel zum Andrücken des Schneidgutes an die Förderfläche, **dadurch gekennzeichnet,** daß
- die Förderfläche als Mantelfläche (7) einer Mitnehmerwalze (1) ausgebildet ist,
- das Messer als endloses, im Bereich der Mitnehmerwalze (1) in einer Messerführung (15) geführtes Bandmesser (14) ausgeführt ist, die Bestandteil eines Andrückschuhs (8) mit einer der Mitnehmerwalze (1) zuweisenden und mit deren Mantelfläche (7) einen Spalt (10 bildenden Andrückfläche (9) ausgestattet ist,
- das Bandmesser (14) eine Schnittebene aufweist, die zur Horizontalen einen sich in Durchlaufrichtung öffnenden Winkel von mindestens 45° bildet und
- die Andrückmittel (4) eine Anzahl von der Mitnehmerwalze (1) weg federnd verdrängbarer Andrückrollen (19) umfassen.

2. Maschine nach Anspruch 1 , **dadurch gekennzeichnet,** daß der Mitnehmerwalze (1) ein Zuführeinrichtung (2) für das Schneidgut vorgeschaltet ist, dessen Fördergeschwindigkeit kleiner ist als die Umlaufgeschwindigkeit der Mitnehmerwalze (1) .

3. Maschine nach Anspruch 1 oder 2 , **dadurch gekennzeichnet,** daß der Andrückschuh (8) bezüglich der Distanz seiner Andrückfläche (9) zu der Oberfläche der Mitnehmerwalze (1) einstellbar und von dieser weg federnd ausweichbar ist.

4. Maschine nach einem der Ansprüche 1 bis 3 , **dadurch gekennzeichnet,** daß jede Andrückrolle (19) angetrieben ist, wobei deren Umlaufachse und die der Mitnehmerwalze (1) im wesentlichen parallel zueinander ausgerichtet sind.

5. Maschine nach einem der Ansprüche 1 bis 4 , **dadurch gekennzeichnet,** daß jede Andrückrolle (19) an dem distalen Endteil eines proximalseitig um eine gestellfeste und zu der Achse der Mitnehmerwalze (1) im wesentlichen parallele Achse (21) schwenkbaren Schwenkarms (20) gelagert ist, wobei das distale Endteil um eine in Längserstreckung des Schwenkarms (20) verlaufende Achse (24) schwenkbar gelagert ist.
